# EUROPÄISCHE PATENTSCHRIFT

(11) **EP 0 939 990 B1**
(45) Veröffentlichungstag und Bekanntmachung des Hinweises auf die Patenterteilung: **14.02.2001**
(21) Anmeldenummer: 97951137.5
(22) Anmeldetag: 06.11.1997
(51) Int. Cl.: H02B 1/32

(54) **MONTAGEEINHEIT MIT EINER MONTAGESCHIENE**
ASSEMBLY UNIT WITH AN ASSEMBLY RAIL
UNITE DE MONTAGE COMPORTANT UN RAIL DE MONTAGE

(30) Priorität: 19.11.1996 DE 19647781
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706143
(87) Internationale Veröffentlichungsnummer: WO9823011

(56) Entgegenhaltungen:
- DE-A- 4 336 187
- DE-A- 4 336 204
- DE-C- 19 537 016
- DE-U- 8 800 227
- DE-U- 9 205 762
- FR-A- 2 420 233

## Beschreibung

Die Erfindung betrifft eine Montageeinheit mit einer mit Montageaufnahmen versehenen Montageschiene, die an Rahmenprofilen eines Schaltschrankes befestigbar ist, wobei an zumindest einem Teil der Rahmenprofile ein oder mehrere Befestigungselemente zur Halterung der Montageschiene anbringbar sind.

Eine derartige Montageeinheit ist aus der DE-A-4 336 187 bekannt.

Solche Montageeinheiten sind auch aus dem Firmenprospekt Rittal Handbuch 27, Seiten 178,179 bekannt. Derartige Montageeinheiten verwenden Montageschienen, die an den Rahmenprofilen eines Rahmengestelles für einen Schaltschrank angebracht werden können.

Die Montageschienen sind als offene, mehrfach abgekantete Hohlprofile ausgebildet. An ihren stirnseitigen Enden besitzen die Montageschienen Steckaufnahmen. In diese Steckaufnahmen lassen sich Steckansätze von Verbindern einstecken. Die Verbinder werden mit den Montageschienen fest verbunden. Mit Befestigungsschrauben läßt sich der Verbinder an die Rahmenprofile anschrauben. Diese besitzen hierzu Reihen von in gleichmäßiger Teilung eingebrachten Befestigungsaufnahmen. Bevorzugt werden solche Montageschienen zwischen zwei vertikalen Rahmenprofilen des Rahmengestelles eingebaut. An den Montageaufnahmen der Montageschienen lasssen sich elektronische Einbauten oder dgl. befestigen.

Es ist Aufgabe der Erfindung, eine Montageeinheit der eingangs erwähnten Art zu schaffen, bei der die Montageeinheit mit geringem Aufwand einfach an Rahmenprofilen angebracht werden kann.

Diese Aufgabe der Erfindung wird dadurch gelöst, daß die Montageschiene zumindest einen Profilschenkel mit wenigstens einer Steckaufnahme aufweist, mittels der sie auf das Befestigungselement aufsteckbar ist, und daß das Befestigungselement gegenüber dem vertikalen Rahmenprofil zur Fixierung der Montageschiene verstellbar ist.

Um eine solche Montageschiene an einem Rahmenprofil anzubringen, muß dieses zunächst an den entsprechenden Positionen mit einem oder mehreren Befestigungselementen versehen werden. Anschließend läßt sich die Montageschiene mit ihrer, an dem Profilschenkel leicht zugänglichen Steckaufnahme auf das Befestigungselement aufschieben. Zur endgültigen Fixierung muß abschließend nur das Befestigungselement verstellt werden, so daß die Montageschiene geklemmt wird. Besonders bewährt hat es sich bei dieser Montageeinheit, daß die Befestigungselemente unabhängig von der Montageschiene montiert werden können. Hierdurch wird eine einfache Handhabung möglich, so daß der Zeitaufwand für die Montage erheblich reduziert ist.

Nach einer bevorzugten Ausgestaltung der Erfindung ist vorgesehen, daß die Montageschiene als offenes Hohlprofil ausgebildet ist, daß der Profilschenkel die Steckaufnahme im Bereich der offenen Profilseite hält, und daß die Steckaufnahme zur offenen Profilseite hin geöffnet ist.

An der offenen Profilseite ist die Steckaufnahme gut zugänglich, so daß eine Befestigung an dem Befestigungselement einfach möglich ist. Zudem läßt sich die Montageschiene einfach fertigen. Sie kann beispielsweise als Stanzbiegeteil ausgebildet sein. Die Steckaufnahme ist dann von dem Profilschenkel ausgespart.

Um die Montageschiene auch an schwer zugänglichen Stellen in unterschiedlichen Positionen einfach montieren zu können, ist vorgesehen, daß sie zwei, zueinander im Winkel stehende Profilschenkel aufweist, die sich in Längsrichtung der Montageeinheit erstrecken, daß die beiden Profilschenkel zumindest jeweils eine Steckaufnahme tragen und daß die Profilschenkel an längsgerichteten Innenwänden der Rahmenprofile des Schaltschrankes anlegbar sind.

Die Innenwände des Rahmenprofiles sind mit den Befestigungselementen ausrüstbar. Abhängig von der Zugänglichkeit zu dem Rahmenprofil können die Befestigungselemente an der einen oder der anderen Innenwand angebracht sein. Mit den im Winkel stehenden Profilschenkeln kann auch eine Ausrichtung und Positionierung der Montageschiene an dem Rahmenprofil erfolgen.

Eine mögliche Erfindungsvariante ist dadurch gekennzeichnet, daß der/die Profilschenkel der Montageschiene neben den Steckaufnahmen Befestigungslöcher aufweisen, die fluchtend zu Gewindeaufnahmen der Rahmenprofile ausrichtbar sind, und daß in die Befestigungslöcher Befestigungselemente einschraubbar sind.

Mit den Befestigungselementen, die mit den Steckaufnahmen in Eingriff gelangen, wird die Montageeinheit zunächst an dem Rahmenprofil positioniert und fixiert. Sollen beispielsweise schwere Einbauten an der Montageschiene angebaut werden, dann können zusätzliche Befestigungselemente in den Befestigungslöchern festgelegt werden.

Eine vorteilhafte Ausgestaltung einer Montageeinheit ist nach der Erfindung dadurch gekennzeichnet, daß die Montageschiene im Querschnitt im wesentlichen quadratisch oder rechteckig aus zwei im rechten Winkel zueinander stehenden Montageabschnitten und den hieran angeschlossenen Profilschenkeln gebildet ist, daß die Montageabschnitte mit denen als Durchbrechungen ausgebildeten Montageaufnahmen versehen sind, und daß die Montageaufnahmen Zugang zu den Befestigungselementen schaffen.

Die Montageschiene läßt sich mit ihren Steckaufnahmen auf die Befestigungselemente aufstecken. Um nun eine feste Anbindung an das Rahmenprofil zu erreichen, sind die Befestigungselemente durch die Montageaufnahmen hindurch zugänglich. Es kann dann mit einem Werkzeug, das in die Montageaufnahme eingesteckt wird, das Befestigungselement betätigt werden. Auf diese Weise ist eine platzsparende Bauweise für die Montageschiene erreicht. Die Befestigungselemente stehen nicht störend an dem Rahmenprofil oder der Montageschiene vor, wo sie den Einbauraum einschränken würden.

Hierbei ist besonders vorteilhaft, wenn zusätzlich vorgesehen ist, daß durch die Montageaufnahmen Befestigungselemente hindurchgereicht und in die Befestigungslöcher einführbar sind, und daß die Schrauben durch die Montageaufnahmen hindurch mit einem Werkzeug zugänglich sind. Damit ist auf einfache Weise auch die zusätzliche Befestigung der Montageschiene an den Befestigungslöchern durchzuführen.

Bei einer erfindungsgemäßen Montageeinheit kann vorgesehen sein, daß das Befestigungselement für die Steckaufnahme als Schraube ausgebildet ist, auf deren Bolzenabschnitt die Steckaufnahme quer zur Mittelachse der Schraube aufgesteckt ist, und daß der Schraubenkopf gegen den zugeordneten Profilschenkel verspannbar ist. Die Schrauben können als einfaches Bauelement kostengünstig eingesetzt werden. Sie haben zudem den Vorteil, daß sie mit ihrem Schraubenkopf den freien Einbauraum kaum einschränken.

Wenn vorgesehen ist, daß die Montageschiene vertikal ausgerichtet an den vertikalen Rahmenprofilen des Schaltschrankes anbringbar ist, wobei die Profilschenkel an, eine Innenaufnahme bildenden Innenwänden der Rahmenprofile anliegen, dann lassen sich an einem vertikalen Rahmenprofil zusätzliche Befestigungsmöglichkeiten aufrüsten.

Die Erfindung wird im folgenden anhand eines in den Zeichnungen dargestellten Ausführungsbeispieles näher erläutert. Es zeigen:
- Fig. 1: in perspektivischer Seitendarstellung ein aus Rahmenprofilen zusammengesetztes Rahmengestell für einen Schaltschrank, und
- Fig. 2: in perspektivischer Explosionsdarstellung einen vertikalen Rahmenschenkel des Rahmengestelles gemäß Fig. 1 und eine Montageschiene.

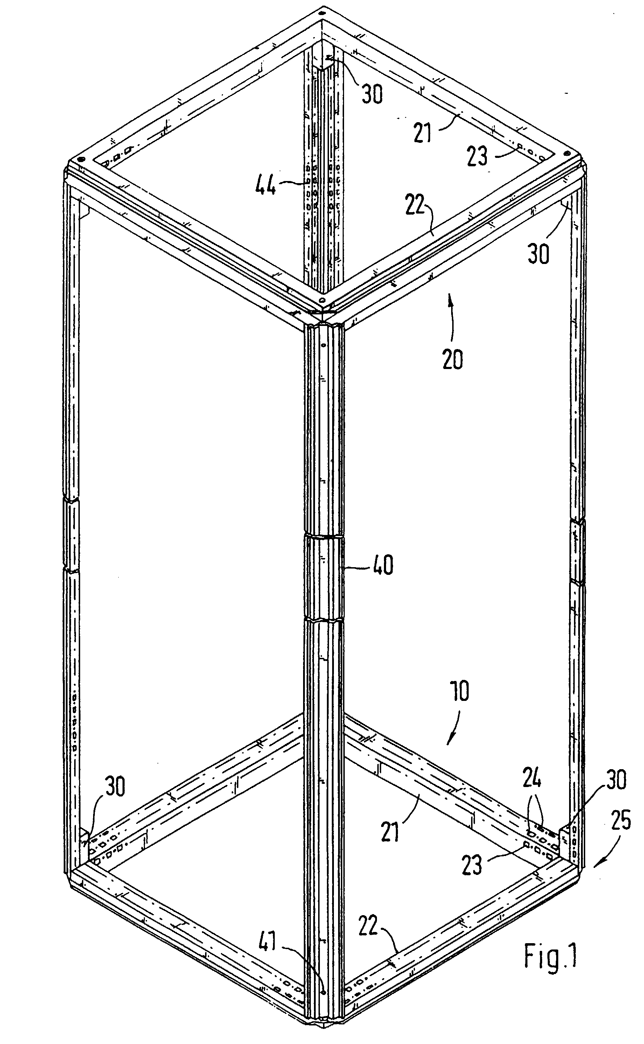

In Fig. 1 ist ein Rahmengestell für einen Schaltschrank gezeigt. Das Rahmengestell ist im wesentlichen aus einem Bodenrahmen 10, einem Deckrahmen 20 und vier vertikalen Rahmenprofilen 40 zusammengesetzt. Die vertikalen Rahmenprofile 40 verbinden den Bodenrahmen 10 mit dem Deckrahmen 20. Der Boden- und der Deckrahmen 10 und 20 sind gleich aufgebaut, so daß sie gegeneinander vertauscht werden können.

Der Boden- und der Deckrahmen 10 und 20 weisen jeweils zwei Tiefen- und Breitenstreben 21, 22 auf. Die Tiefen- und Breitenstreben 21, 22 sind an ihren, dem Innenraum des Rahmengestelles zugekehrten Profilseiten mit Reihen von Befestigungsaufnahmen 23, 24 versehen. Auch die vertikalen Rahmenprofile 40 sind mit zum Innenraum des Rahmengestelles gekehrten Befestigungsaufnahmen 44 versehen. An Befestigungsaufnahmen 23, 24, 44 lassen sich z.B. Montageschienen 50 anbringen.

Die vertikalen Rahmenprofile 40 sind über Verbinder 30 mit dem Boden- bzw. Deckrahmen 10, 20 verbunden. Die Verbinder 30 sind im Bereich von Eckaufnahmen 25 des Boden- bzw. Deckrahmens 10, 20 angeordnet. Die Befestigung der vertikalen Rahmenprofile 40 an dem Verbinder 30 erfolgt beispielsweise mittels einer Verschraubung. Hierzu können die vertikalen Rahmenprofile 40 endseitig mit Schraubenaufnahmen 41 versehen sein.

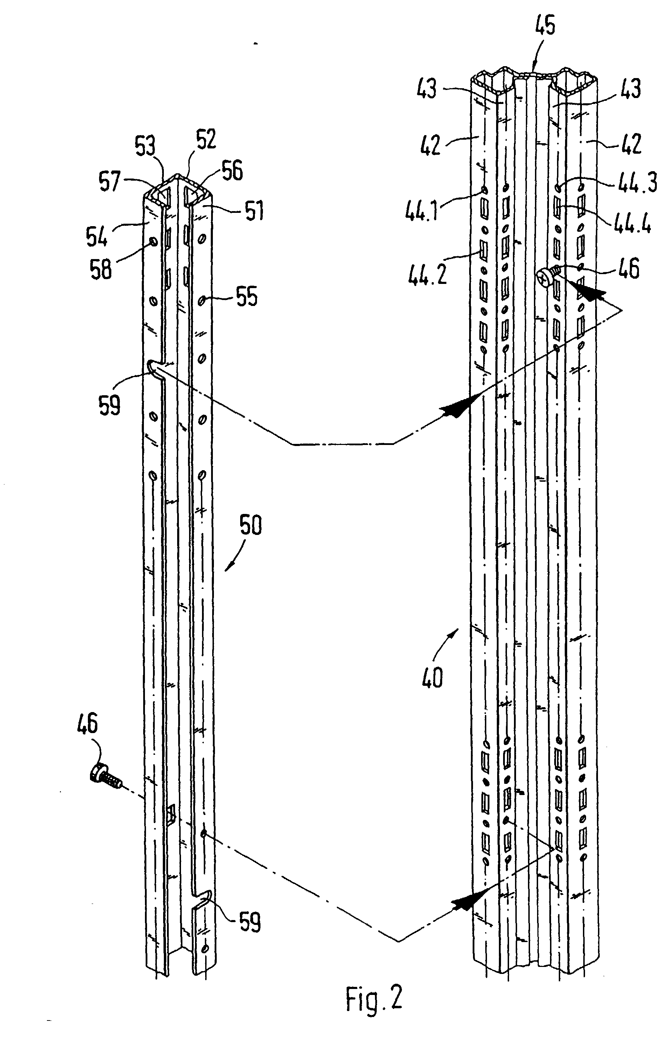

In Fig. 2 ist näher gezeigt, wie eine Montageschiene 50 an einem der vertikalen Rahmenprofile 40 angebracht werden kann. Von dem vertikalen Rahmenprofil 40 ist in der Zeichnung gem. Fig. 2 nur ein Teil gezeigt. Die Montageschiene 50 hat eine diesem Teil entsprechende Länge. Mit dieser Darstellung wird verdeutlicht, daß die Montageschienen 50 abschnittsweise an beliebigen Orten entlang des vertikalen Rahmenprofiles 40 anbringbar sind. Selbstverständlich können auch die zum Einsatz kommenden Montageschienen in ihrer Länge variieren. Sie können sich beispielsweise auch über die gesamte axiale Länge der vertikalen Rahmenprofile 40 erstrecken.

Das vertikale Rahmenprofil 40 besitzt zwei Innenwände 43, die zueinander im rechten Winkel stehen. Sie bilden eine Innenaufnahme 45, die zum Innenraum des Rahmengestelles gerichtet ist. An die beiden Innenwände 43 schließt sich jeweils eine Profilseite 42 rechtwinklig an. Die Profilseiten 42 stehen vertikal zu den zugeordneten Außenseiten des Rahmengestelles. Die Profilseiten 42 und die Innenwände 43 sind mit Reihen von in gleichmäßiger Teilung eingebrachten Befestigungsaufnahmen 44.1 bis 44.4 versehen. Wechselweise sind als Befestigungsaufnahmen schlitzförmige Durchbrechungen und Bohrungen verwendet. In den Bohrungen lassen sich Befestigungselemente 46, vorliegend sind Schrauben verwendet, eindrehen. Die Befestigungselemente 46 ermöglichen eine Positionierung und Fixierung der Montageschiene 50.

Die Montageschiene 50 ist im Querschnitt quadratisch aufgebaut. Dieser Querschnitt wird von zwei rechtwinklig aneinander gebundenen Montageabschnitten 52, 53 und zwei Profilabschnitten 51, 54 gebildet. Die Profilabschnitte 51, 54 sind jeweils von den freien Enden der Montageabschnitten 52, 53 abgekantet.

So bildet sich ein Hohlprofil, das im Bereich zwischen den Profilabschnitten 51, 54 offen ist. In die Montageabschnitte 52, 53 sind Montageaufnahmen 56, 57 eingearbeitet. Aus den Profilseiten 51, 54 sind Befestigungslöcher 55, 58 ausgestanzt. Die Montageaufnahmen 51, 54 und die Befestigungslöcher 55, 58 sind in gleicher Teilung zueinander beabstandet angeordnet. Die Befestigungslöcher 55, 58 sind dabei so angeordnet, daß sie mit einer Montageaufnahme 56, 57 des parallel zum jeweiligen Profilabschnittes stehenden Montageabschnitt fluchten. Die Befestigungslöcher 55, 58 sind damit über die Montageaufnahmen 56, 57 zugänglich.

Zur Befestigung der Montageschiene 50 an dem vertikalen Rahmenprofil 40 sind in die Profilseiten 51, 54 Steckaufnahmen 59 eingebracht. Die Steckaufnahmen 59 sind schlitzfömig ausgebildet und zum freien vertikalen Ende der Profilabschnitte 51, 54 hin geöffnet. Pro Profilabschnitt 51, 54 ist vorliegend eine Steckaufnahme 59 verwendet. Zur Festlegung der Montageschiene 50 wird zunächst ein Befestigungselement 46 in eine Befestigungsaufnahme 44.3 des vertikalen Rahmenprofiles 40 eingeschraubt. In welche der Innenwände 43 des Rahmenprofiles 40 das Befestigungsgelement 46 (im folgenden Schraube genannt) eingeschraubt wird, ist frei wählbar und wird im wesentlichen von der Zugänglichkeit bestimmt. Auf den Bolzenabschnitt der Schraube wird die Montageschiene 50 mit ihrer Steckaufnahme 59 des Profilabschnittes 54 aufgesteckt. Diese Aufsteckbewegung wird durch die Pfeildarstellung in Fig. 2 symbolisiert. Wenn die Montageschiene 50 so an dem Rahmenprofil 40 angebracht ist, ist sie vorpositioniert. Durch eine fluchtend zu der Steckaufnahme 59 angeordneten Montageaufnahme 56 des Montageabschnittes 52 ist die Schraube an ihren Schraubenkopf für ein Werkzeug zugänglich. Wenn die Schraube weiter in das Befestigungsloch 44.3 eingedreht wird, so verspannt sich der Schraubenkopf auf dem Profilabschnitt 54 so, daß die Montageschiene 50 in die Innenaufnahme 45 des Rahmenprofiles 40 eingezogen wird. Die beiden Profilabschnitte 51, 54 liegen dann an den Innenwänden 43 an. Die Montageschiene 50 ist exakt an dem Rahmenprofil 40 ausgerichtet.

Zur zusätzlichen Befestigung können durch einzelne Montageaufnahmen 56, 57 Schrauben hindurchgereicht in die Befestigungslöcher 55, 58 eingeführt und in die jeweils zugeordnete Befestigungsaufnahme 44.3 in der Innenwand 43 eingeschraubt werden. Je nach der Art und Größe der Belastung, mit der die Montageschiene 50 beaufschlagt wird, können ein oder mehrere zusätzliche Befestigungselemente 46 Verwendung finden.

## Patentansprüche

1. Montageeinheit mit einer mit Montageaufnahmen (56,57) versehenen Montageschiene (50), die an Rahmenprofilen (40) eines Schaltschrankes befestigbar ist, wobei an zumindest einem Teil der Rahmenprofile (40) ein oder mehrere Befestigungselemente (46) zur Halterung der Montageschiene (50) anbringbar sind, dadurch gekennzeichnet,
daß die Montageschiene (50) zumindest einen Profilschenkel (51, 54) mit wenigstens einer Steckaufnahme (59) aufweist, mittels der sie auf das Befestigungselement (46) aufsteckbar ist, und
daß das Befestigungselement (46) gegenüber dem vertikalen Rahmenprofil (40) zur Fixierung der Montageschiene (50) verstellbar ist.

2. Montageeinheit nach Anspruch 1,
dadurch gekennzeichnet,
daß die Montageschiene (50) als offenes Hohlprofil ausgebildet ist,
daß der Profilschenkel (51, 54) die Steckaufnahme (59) im Bereich der offenen Profilseite hält, und
daß die Steckaufnahme (59) zur offenen Profilseite hin geöffnet ist.

3. Montageeinheit mit Anspruch 1 oder 2,
dadurch gekennzeichnet,
daß die Montageschiene (50) zwei, zueinander im Winkel stehende Profilschenkel (51, 54) aufweist, die sich in Längsrichtung der Montageeinheit (50) erstrecken,
daß die beiden Profilschenkel (51, 54) zumindest jeweils eine Steckaufnahme (59) tragen und
an längsgerichteten Innenwänden (43) der Rahmenprofile (40) des Schaltschrankes anlegbar sind.

4. Montageeinheit nach einem der Ansprüche 1 bis 3,
dadurch gekennzeichnet,
daß der/die Profilschenkel (51, 54) der Montageschiene (50) neben den Steckaufnahmen (59) Befestigungslöcher (55, 58) aufweist, die fluchtend zu Gewindeaufnahmen (44.3) der Rahmenprofile (40) ausrichtbar sind, und
daß in die Befestigungslöcher (55, 58) Befestigungselemente (46) einschraubbar sind.

5. Montageeinheit nach einem der Ansprüche 1 bis 4,
dadurch gekennzeichnet,
daß die Montageschiene (50) im Querschnitt im wesentlichen quadratisch oder rechteckig aus zwei im rechten Winkel zueinander stehenden Montageabschnitten (52, 53) und den hieran angeschlossenen Profilschenkeln (51, 54) gebildet ist,
daß die Montageabschnitte (52, 53) mit den als Durchbrechungen ausgebildeten Montageaufnahmen (56, 57) versehen sind, und
daß die Montageaufnahmen Zugang zu den Befestigungselementen (46) schaffen.

6. Montageeinheit nach Anspruch 5,
dadurch gekennzeichnet,
daß durch die Montageaufnahmen (56, 57) Befestigungselemente (46) hindurchgereicht und in die Befestigungslöcher (55, 58) einführbar sind, und
daß die Schrauben durch die Montageaufnahmen (56, 57) hindurch mit einem Werkzeug zugänglich sind.

7. Montageeinheit nach einem der Ansprüche 1 bis 6,
dadurch gekennzeichnet,
daß das Befestigungselement (46) für die Steckaufnahme als Schraube ausgebildet ist, auf deren Bolzenabschnitt die Steckaufnahme (59) quer zur Mittelachse der Schraube aufgesteckt ist, und
daß der Schraubenkopf gegen den zugeordneten Profilschenkel (51, 54) verspannbar ist.

8. Montageeinheit nach einem der Ansprüche 1 bis 7,
dadurch gekennzeichnet,
daß die Montageschiene (50) vertikal ausgerichtet an den vertikalen Rahmenprofilen (40) des Schaltschrankes anbringbar ist, wobei die Profilschenkel (51, 54) an, eine Innenaufnahme (45) bildenden Innenwänden (43) der Rahmenprofile (40) anliegen.

## Claims

1. Assembly unit, having a mounting rail (50) which is provided with mounting receivers (56, 57) and is securable on frame profiles (40) of a switchgear cabinet, one or more securing elements (46) being mountable on at least one portion of the frame profiles (40) to retain the mounting rail (50), characterised in that the mounting rail (50) has at least one profile member (51, 54) provided with at least one recess (59), by means of which said rail is attachable to the securing element (46), and in that the securing element (46) is adjustable relative to the vertical frame profile (40) for the securement of the mounting rail (50).

2. Assembly unit according to claim 1, characterised in that the mounting rail (50) is configured as an open hollow profile, in that the profile member (51, 54) retains the recess (59) in the region of the open profile side, and in that the recess (59) is open towards the open profile side.

3. Assembly unit according to claim 1 or 2, characterised in that the mounting rail (50) has two profile members (51, 54), which lie at an angle relative to each other and extend in the longitudinal direction of the mounting rail (50), and in that the two profile members (51, 54) each carry at least one recess (59) and can be fitted onto longitudinally orientated internal walls (43) of the frame profiles (40) of the switchgear cabinet.

4. Assembly unit according to one of claims 1 to 3, characterised in that the profile member/members (51, 54) of the mounting rail (50) has/have, in addition to the recesses (59), securing holes (55, 58) which are alignable with threaded receivers (44.3) of the frame profiles (40), and in that securing elements (46) are screwable into the securing holes (55, 58).

5. Assembly unit according to one of claims 1 to 4, characterised in that the mounting rail (50) has a substantially square or rectangular cross-section and is formed from two mounting portions (52, 53), which lie at right angles to each other, and the profile members (51, 54) which communicate therewith, in that the mounting portions (52, 53) are provided with the mounting receivers (56, 57), which are configured as openings, and in that the mounting receivers provide access to the securing elements (46).

6. Assembly unit according to claim 5, characterised in that securing elements (46) are traversed by the mounting receivers (56, 57) and are insertable in the securing holes (55, 58), and in that the screws are accessible by a tool through the mounting receivers (56, 57).

7. Assembly unit according to one of claims 1 to 6, characterised in that the securing element (46) for the recess is configured as a screw, and the recess (59) is mounted on the bolt portion of said screw transversely relative to the central axis of the screw, and in that the screw head is tensionable in opposition to the associated profile member (51, 54).

8. Assembly unit according to one of claims 1 to 7, characterised in that the mounting rail (50) is mountable, in a vertically aligned manner, on the vertical frame profiles (40) of the switchgear cabinet, the profile members (51, 54) abutting against internal walls (43) of the frame profiles (40), which walls form an internal receiving means (45).

## Revendications

1. Unité de montage comportant un rail de montage (50) présentant des logements de montage (56, 57), rail de montage (50) qui peut être fixé à des profilés d'encadrement d'une armoire de distribution, où sur au moins une partie (40) des profilés d'encadrement peuvent être montés un ou plusieurs éléments de fixation (46) pour la fixation du rail de montage (50),
caractérisée
en ce que le rail de montage (50) présente au moins une aile de profilé (51, 54) doté d'au moins un logement d'enfichage (59), au moyen duquel il peut être enfiché sur l'élément de fixation (46), et
en ce que l'élément de fixation (46) est réglable par rapport au profilé d'encadrement vertical (40) aux fins de la fixation du rail de montage (50).

2. Unité de montage suivant la revendication 1,
caractérisée
en ce que le rail de montage (50) a la forme d'un profilé creux ouvert,
en ce que l'aile de profilé (51, 54) présente le logement d'enfichage (59) dans la région du côté de profilé ouvert, et
en ce que le logement d'enfichage (59) est ouvert en direction du côté de profilé ouvert.

3. Unité de montage suivant la revendication 1 ou la revendication 2,
caractérisé
en ce que le rail de montage (50) présente deux ailes de profilé (51, 54) formant entre elles un angle, ailes de profilé qui sont orientées en direction longitudinale de l'unité de montage (50),
en ce que chacune des deux ailes de profilé (51, 54) présente au moins un logement d'enfichage (59) et
en ce que les ailes de profilé peuvent être appliquées sur des parois intérieures (43) orientées longitudinalement des profilés d'encadrement (40) de l'armoire de distribution.

4. Unité de montage suivant l'une quelconque des revendications de 1 à 3,
caractérisée
en ce que outre les logements d'enfichage (59), l'une ou les deux ailes de profilé (51, 54) du rail de montage (50) présente(nt) des trous de fixation (55, 58), qui peuvent être placés en alignement avec des logements filetés (44.3) des profilés d'encadrement (40), et
en ce que des éléments de fixation (46) peuvent être vissés dans les trous de fixation (55, 58).

5. Unité de montage suivant l'une quelconque des revendications de 1 à 4,
caractérisée
en ce que le rail de montage (50) est en substance à section transversale carrée ou rectangulaire et est formé de deux tronçons de montage (52, 53) disposés à angle droit ainsi que des ailes de profilé (51, 54) y raccordées,
en ce que les tronçons de montage (52, 53) présentent les logements de montage (56, 57) ayant la forme de percements. et
en ce que les logements de montage autorisent l'accès aux éléments de fixation (46).

6. Unité de montage suivant la revendication 5,
caractérisée
en ce qu'au travers des logements de montage (56, 57) peuvent être passés des éléments de fixation (46) qui peuvent être introduits dans les trous de fixation (55, 58), et
en ce qu'au travers des logements de montage (56, 57), un outil peut avoir accès aux vis.

7. Unité de montage suivant l'une quelconque des revendications de 1 à 6,
caractérisée
en ce que l'élément de fixation (46) pour le logement d'enfichage a la forme d'une vis, sur la tige de laquelle est enfiché le logement d'enfichage (59) transversalement à l'axe de la tige, et
en ce que la tête de la vis peut être serrée sous contrainte sur l'aile de profilé (51, 54) associée.

8. Unité de montage suivant l'une quelconque des revendications de 1 à 7,
caractérisée
en ce que le rail de montage (50), orienté verticalement, peut être monté sur les profilés d'encadrement verticaux (40) de l'armoire de distribution, opération lors de laquelle les ailes de profilé (51, 54) sont appliquées sur les parois intérieures (43) des profilés d'encadrement (40), avec création d'un logement intérieur (45).
